(19) Europäisches Patentamt
European Patent Office
Office européen des brevets

(11) **EP 3 370 179 A1**

(12) **EUROPEAN PATENT APPLICATION**

(43) Date of publication:
**05.09.2018 Bulletin 2018/36**

(51) Int Cl.:
***G06F 21/10*** *(2013.01)*

(21) Application number: **18160017.2**

(22) Date of filing: **05.03.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.03.2017 US 201715449424**

(71) Applicant: **Patton Electronics Company
Gaithersburg, MD 20879 (US)**

(72) Inventor: **MEYER, Thomas
Gaithersburg, MD Maryland 20879 (US)**

(74) Representative: **Zacco Sweden AB
P.O. Box 5581
114 85 Stockholm (SE)**

(54) **METHOD AND SYSTEM FOR DISTRIBUTING FLOATING LICENSES FOR REAL-TIME SERVICES**

(57) A method and system that distributes floating licenses over a communication network, where the licensed services must be able to start without delay. The system comprises of at least one license server that stores and manages software-feature licenses and a set of client devices that are connected to the license server over a communication network and that lease licenses for licensed features from the server temporarily. The license distribution method is designed for licensed real-time features or services, typically with a short life time. Such real-time services are started and stopped frequently and must not be imposed with an additional delay for requesting a license from the license server. Examples for such services are voice and video calls. This document describes a method and system to solve this license distribution problem for real-time services.

FIG. 1

## Description

## BACKGROUND

Vendors of commercial software often want to protect premium features of their software with licenses. Licenses unlock those premium features permanently or for a certain time.

There are two fundamentally different methods how licenses are made available to a device running the licensed software. Historically, licenses were bound to a device by manually installing them on the hardware. With the advent of mobile and virtual devices and appliances this is not feasible anymore. First, for the vast number of mobile devices, especially in the Internet-of-Things (IoT) domain, it is impractical to install licenses manually. And second, virtual devices often cannot be protected against copy-cloning software on virtual machines, which includes the possibility of cloning the installed licenses.

Therefore, the use of floating licenses has been proposed, where the devices running locked software connect to a license server over a communication network (typically the Internet). Those devices temporarily lease licenses from that license server. Licenses distributed by a license server over a network are often called floating licenses, because they can float around in the network. Hence, license servers that offer floating licenses simplify the process of managing a large number of software licenses.

For licensed services that run for a long time, e.g. from boot-up to shut-down of the device, the license server can issue licenses on demand, i.e., before the service is being started. This method however does not work well for short-lived real-time services, such as voice or video calls. Asking the license server for a license prior to allowing a call to be placed would delay the call establishment and have a negative effect on the user experience. This suggests that we need a more efficient way for distributing floating licenses for such real-time services.

## SUMMARY

A license server for distributing floating licenses, comprising: a device connection module configured to manage a connection over a communication network to a client device; a license arbitration module configured to: receive a license request for a feature from the client device; determine a number of licenses for the feature to allocate to the client device based on any arithmetic function (e.g. the average) over the number of available licenses for the feature and the number of licenses available for the client device; and distribute the allocated number of licenses to the client device; and a memory module storing the number of available licenses for the feature on the server and the number of licenses allocated to client device.

A client device, comprising a server connection module configured to manage a connection over a communication network to a license server; a license management module configured to: send a license request for a feature to the license server; determine a number of licenses for the feature in use by the client device; determine a number of licenses for the feature available for use on the client device; and a memory module storing the number of licenses allocated to the client device and the number of licenses used by the client device.

A method of allocating floating licenses, comprising storing a server table of features available for licensing in a license database; associating a number of available licenses with each respective feature; associating a number of allocated licenses with the feature; storing in a client table in the license database a current number of licenses allocated to the client and a number of licensed used by for each respective client; receiving at a license server a license-exchange request from a client device when the client joins the network, the license exchange request including, for each feature licensed by that client, a current number of licenses allocated to that client and a number of licensed used by that client; updating the client table in the database with the received values; iterating over all features and computing a new number of allocated licenses for the feature to the client device; and sending to the client the new values for all features.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

## BRIEF DESCRIPTION OF THE DRAWINGS

FIG. 1 illustrates an exemplary system according to an embodiment of the invention;
FIG. 2 illustrates an exemplary system according to an embodiment of the invention;
FIG. 3 illustrates an exemplary system according to an embodiment of the invention; and
FIG. 4 illustrates an example database system;
FIG. 5 illustrates an example database system;
FIG. 6 illustrates an exemplary method according to an embodiment of the invention;
FIG. 7 illustrates an exemplary methods according to an embodiment of the invention;
FIG. 8 illustrates an exemplary system according to an embodiment of the invention;

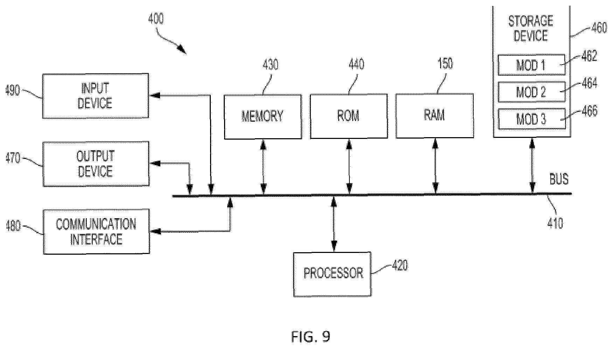

FIG. 9 illustrates an exemplary allocation of licenses according to an embodiment of the invention.

## DETAILED DESCRIPTION

Various configurations and embodiments of the disclosure are described in detail below. While specific implementations are described, it should be understood that this is done for illustration purposes only. Other components and configurations may be used without parting from the spirit and scope of the disclosure.

Embodiments of the present invention provide a system and method for distributing floating licenses that is suited for services with a short lifetime or in general for services that must be launched without the additional delay that is required to ask the license server for a license. This improves the functionality of the device, allowing the service to start on request.

A license management system is provided. The license management system comprises a license server to store and manage licenses where each license unlocks one or more software features and at least one client device that needs one or more licenses to unlock software features. The client device may or may not store the temporarily leased license permanently; it is sufficient to store the leased license in volatile memory and release the license after a reboot.

When the client device boots up, and prior to using any of the licensed services, it contacts the license server to announce the software features for which the device needs licenses from the server. This may or may not include the quantity of each license type.

Embodiments of the present invention provide a method of distributing floating licenses temporarily to the client devices based on their needs and based on the licenses available in the network. One aspect of the invention is to proactively distribute licenses to the devices, i.e. prior to the launch of the licensed services.

For example, if a device is capable of making $n$ parallel voice calls, where each parallel call must be unlocked by a license, the license server sends n or less licenses to the device before any calls are placed. This may be accomplished by issuing the license when the client device joins the network. Embodiments of the present invention provide a method of distributing the licenses from the license server to the client devices even if the total number of licenses installed is less than the sum of the potential licenses needed by the client devices. This is done by a continuous exchange of licenses that takes license-usage metrics into account and re-balances the license distribution in the network. The number of licenses in the system may be balanced based on one client device at a time communicating with the license server as described below. The licenses are proactively distributed to a client device when the client device enters the network.

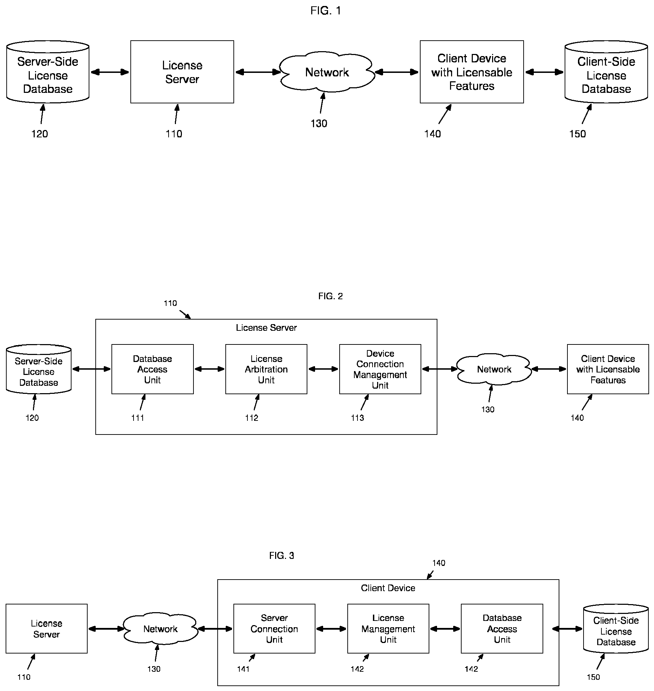

FIG. 1 shows a license system 100 that includes a license server 110, a license database for the server 120, a client device 140, a communication network 130 over which server and clients communicate, and a license database for the client 150. The license system 100 may also include additional and/or different units. Also, the functionality of two or more units could be integrated into a single component. For example, the server database 120 and the license server 110, or the client database 150 and client 140 may be incorporated into a single device, respectively.

The license server 110 manages the licenses in the license system 100. Licenses may be installed by a system administrator and stored in the license database 120. The client device 140 opens a connection to the license server 110 over the network 130 and tries to keep this connection open. The connection may be dropped, but the client device 140 should immediately attempt to re-establish the connection. The client device 140 maintains a local database 150 of the licenses leased from the license server 110. This local database 150 may be volatile, i.e. it is cleared after a reboot of the client device 140.

Operation of the Client Device

FIG. 3 shows exemplary components of the client device 140. The server connection unit 141 connects to the license server 110, keeps this connection open, and tries to reconnect if the connection is dropped. The license management unit 142 periodically sends license exchange-request messages to the license server 110 over the communication network 130 through its server connection unit 141. The license management unit 142 accesses the local license database 150 that temporarily stores information about licenses leased from the license server 110.

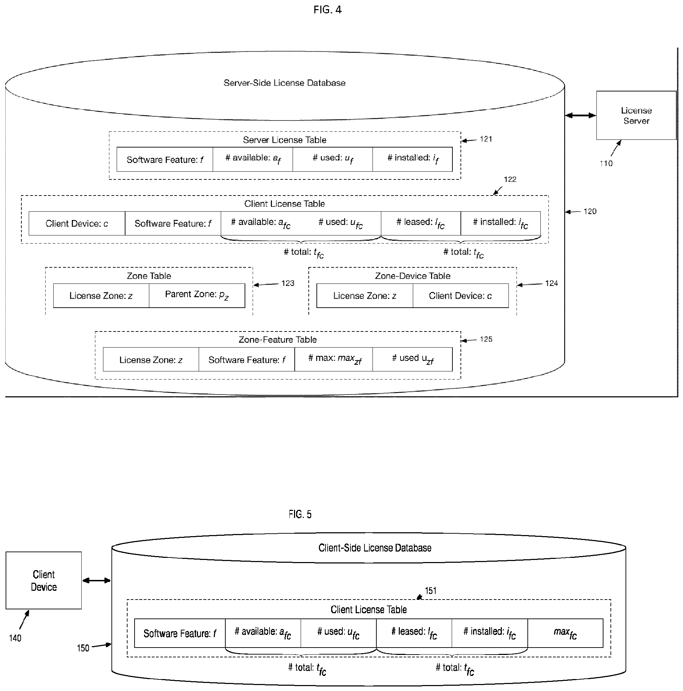

FIG. 5 shows the values kept in the client-side license database 150. For each software feature $f$, the Client License Table 151 may store one or more counters. For example, the number of installed licenses is kept in field $i_{fc}$. This allows the operator of the client device to install some licenses permanently. The field $l_{fc}$ refers to the number of licenses leased from the license server 110. The latter value may change after each license exchange with the license server 110. The two fields sum up to the total number of licenses the client device 140 may use at the maximum, $t_{fc}$. The field $max_{fc}$ specifies the maximum number of feature instances the client device 140 can handle. This restriction may be a physical limitation (e.g. due to limited performance) or a configuration limitation: $i_{fc} + l_{fc} <= max_{fc}$. The Client License Table 151 also stores usage information about a license. Field $u_{fc}$ ($u_{fc} < t_{fc}$) tracks the number of licenses that are currently used by the client device, i.e. those licenses that are temporarily bound to a running instance of the corresponding software feature $f$. For completeness FIG. 5 also shows field $a_{fc}$ that tracks the licenses currently available for feature instances. However, in some implementations of the license system, $a_{fc}$ may be deduced from the other fields: $a_{fc} = t_{fc} - u_{fc}$.

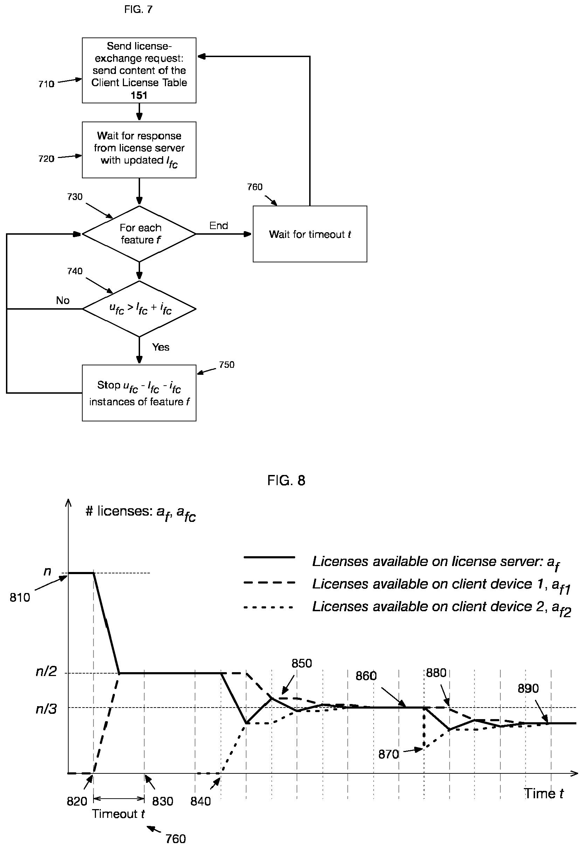

FIG. 7 shows the license-exchange algorithm implemented in the license management unit 142 in client device 140. Periodically, the license management unit 142 sends 710 the content of the client license table 151 (see FIG. 5) to the license server 110. The client then waits 720 for a response from the server. The response contains for each feature $f$ updated values for the number of leased licenses, $l_{fc}$. For each feature $f$ 730, the client algorithm then checks 740 whether the current number of used licenses, $u_{fc}$, is now greater than the total number of licenses installed on the device, $i_{fc}$, plus the new number of licenses leased from the server, $l_{fc}$. This may be the case if the license server 110 decided to revoke some of the floating licenses, i.e., if the number of leased licenses returned in step 720 is smaller than the value before. In this case 750 the license management unit 142 stops $u_{fc}$ - $l_{fc}$ - $i_{fc}$ instances of features $f$ to prevent the client device 140 from using more licenses than allowed. After processing all features 730, the algorithm waits for some seconds, $t$ 760 (typically 10s to 120s) before it sends another license-exchange request to the server. The correct operation of the license distribution algorithm on the license server does not depend on the value of timeout $t$; different client devices may use different timeout values.

Operation of the License Server

FIG. 2 shows the components of the license server 110. The device connection management unit 113 accepts semi-persistent connections from the connected client devices 140 over the communication network 130. License-exchange requests from the client devices 140 are processed in the license arbitration unit 112, which accesses the server-side database 120 via the database access unit 111.

FIG. 4 shows the values kept in the server-side database 120. For each software feature f, the Server License Table 121 stores the number of licenses installed by the operator, $i_f$, as well as usage information in the form of the number of licenses used (i.e., leased to client devices), $u_f$, and the number of licenses that are still available for leasing to client devices, $a_f = i_f - u_f$. The database 120 also maintains a Client License Table 122, which mirrors for each client device c the Client License Table 151 of the client-side database 150 that is sent to the license server 110 with a license-exchange request (see algorithm in Fig. 7). An entry for client c in the Client License Table 151 exists only for the duration of a license exchange with that client. That is, the server does not need complete knowledge of the current license distribution in the network. The proposed license-distribution algorithm works with local information only, i.e., only with information exchanged between one client and the server.

FIG. 4 shows three additional, persistent tables in the server-side database 120. The goal of these tables is to allow the operator to limit the number of licenses assigned to a sub-set of the client devices (zone). For this purpose, client devices may be linked to a license-distribution zone. The Zone Table 123 defines several license-distribution zones and organizes them in a hierarchical tree where each zone (except the root zone) is linked to a parent zone and implicitly, each zone has zero or more child zones. The Zone-Device table 124 links a client device c to a license-distribution zone z such that implicitly, each zone contains zero or more devices. Finally, the Zone-Feature table 125 configures for each zone z and feature f that no more than $max_{zf}$ licenses of feature $f$ can be allocated to all devices linked to zone z or any of its child zones. The same table 125 also contains a volatile field $u_{zf}$ that counts the number of licenses for feature $f$ currently allocated to all devices linked to zone z or any of its child zones. The three zone-configuration tables 123, 124, and 125 are optional in the sense that the license distribution algorithm works without configured zones.

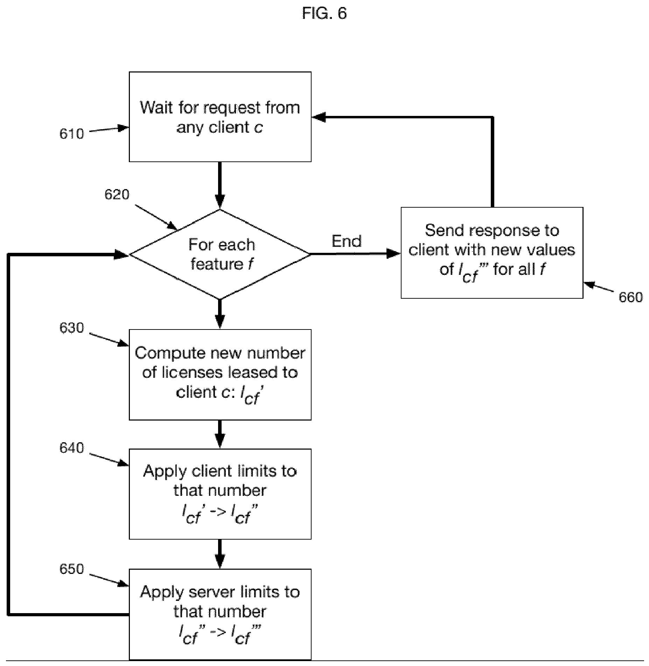

FIG. 6 shows the process performed by the license arbitration unit 112 on the license server 110. The license arbitration unit 112 first waits 610 for a license-exchange request from any of the connected client devices c and creates a new entry in the Client License Table 112 in the database 120 and updates the entry with the received values. The license arbitration unit 112 then iterates 620 over all features $f$ and computes 630 a candidate value for the new number of leased licenses for feature $f$ to the client device c: $l_{cf}'$. Then, the license arbitration unit 112 applies client 640 and server restrictions 650 to the computed candidate, resulting in $l_{cf}''$ and $l_{cf}'''$, respectively. For example, a client must not receive more feature licenses than it can physically handle. Finally, the license arbitration unit 112 sends 660 the new updated candidate values $l_{cf}'''$ for all features $f$ to the client device c and may delete the corresponding entry from the Client License Table 112.

Next, how the number of licenses is computed 630 is described. For the client c from which the license-exchange request was received and for each licensed feature $f$, the license arbitration unit 112 computes a new distribution of (1) the number of available licenses in the server license table 121, $a_f$, and (2) the number of available licenses for client c in the client license table 122, $a_{fc}$:

$$a_f' = F(a_f, a_{fc})$$

$$a_{fc}' = G(a_f, a_{fc})$$

The distribution functions F and G may perform any arithmetic computation but must preserve the total number of licenses, i.e., $F(a_f, a_{fc}) + G(a_f, a_{fc}) = a_f + a_{fc}$. The most useful way of distributing the licenses is to build the arithmetic mean (or average) of the available client and server licenses

$$F(a_f, a_{fc}) = G(a_f, a_{fc}) = (a_f + a_{fc}) / 2$$

such that

$$a_f' = a_{fc}' = (a_f + a_{fc}) / 2$$

But a more complex distribution may be applied. For example, we may want to keep more licenses on the server such that new clients can get licenses more quickly. In this case, we skew the average with a factor $s < S$:

$$F(a_f, a_{fc}) = s(a_f + a_{fc}) / S$$

$$G(a_f, a_{fc}) = (S-s)(a_f + a_{fc}) / S$$

To respect the invariant $a_{fc} + u_{fc} = t_{fc} = l_{fc} + i_{fc}$, the license arbitration unit 112 then computes the client's first candidate number of leased licenses:

$$l_{fc}' = a_{fc}' + u_{fc} - i_{fc}$$

After this, the license arbitration unit 112 checks client limits 640, i.e. whether the candidate total number of licenses for client c, $t_{fc}' = l_{fc}' + i_{fc}$, exceeds the max. number of licenses the client device can handle, $max_{fc}$. By applying this limit, the license arbitration unit 112 computes the client's second candidate number of leased licenses, $l_{fc}''$, and returns the excessive amount, $d'$, back to the candidate number of available licenses on the server, $a_f''$.

$$\text{if } l_{fc}' + i_{fc} > max_{fc}:$$

$$d' := l_{fc}' + i_{fc} - max_{fc}$$

else:

$$d' := 0$$

$$l_{fc}'' := l_{fc}' - d'$$

$$a_f'' := a_f' + d'$$

Then, the license arbitration unit 112 checks server limits 650, i.e. whether the limits in the license-distribution zones are still respected: For zone z to which device c is linked in the Zone-Device table 124 and for all parent zones, the license arbitration unit 112 computes the candidate number of used licenses in that zone, $u_{zf}''$, and checks whether this value exceeds the configured zone limit, $max_{zf}$. By applying this limit, the license arbitration unit 112 computes the client's third candidate number of leased licenses, $l_{fc}'''$, and returns the excessive amount, $d''$, back to the candidate number of available licenses on the server, $a_f'''$.

$$u_{zf}'' := u_{zf} - l_{fc} + l_{fc}''$$

$$\text{if } u_{zf}'' > max_{zf}:$$

$$d'' := max_{zf} - u_{zf}''$$

$$u_{zf}''' := max_{zf}$$

else:

$$d'' := 0$$

$$u_{zf}''' := u_{zf}''$$

$$l_{fc}''' := l_{fc}'' - d''$$

$$a_f''' := a_f'' + d''$$

The candidate number of available licenses on the server, $a_f'''$, is written back to the server license table 121, the computed zone utilization, $u_{zf}'''$, is written back to the Zone-Feature table 125, the candidate values for client c, $l_{fc}'''$ and $a_{fc}''' = l_{fc}''' + i_{fc} - u_{fc}$, are written to the client license table 122, and the candidate number of licenses leased to client c, $l_{fc}'''$, will be sent back to the client 660. Finally, the corresponding entry for client c in the Client License Table 122 may be deleted. This last step is possible because the algorithm does not need global knowledge of the states of all clients.

This process should have the following desired properties:

The computation of the average or another suitable arithmetic function guarantees that the total number of licenses in the system remains constant.

Even though the process only operates on the data of the license server 110 and one single client device 140 at a time, the entire network converges to a state where all client devices 140 possess the same number of available licenses.

The license server 110 always keeps a stock of licenses available in case a new client device 140 connects.

The advantage of distributing licenses evenly within the network is that client devices 140 can use licenses without first contacting the license server 110. This reduces the latency of starting licensed real-time features.

By distributing licenses based on the number of available licenses rather than the total number of licenses on a client device, the algorithm pushes more licenses to devices where licenses are already in use. Like this, every device maintains the same capability of using new licenses in the next time period.

FIG. 8 shows the behavior of the algorithm for a single feature $f$ in a simple network with one license server 110 and two client devices 140, neither of which has a license restriction, i.e. $max_{f1} = max_{f2} = \infty$. The system administrator installed $n$ licenses on the license server, $i_f=n,$ and did not configure any restrictions with license-distribution zones. Before any exchange between the client devices and the server occurred 810, all licenses are available on the license server: $a_f= i_f=n.$

When receiving the first license-exchange request from the first client device, the license server computes 820 the average number of licenses available on the license server ($a_f=n$) and on the client device ($a_{f1} = 0$). The result, $n/2$, is deployed as new value for the number of available licenses on the license server and sent back to the client device. After the timeout period $t$ 760 (see FIG. 7), the same client device sends another license-exchange request 830. After running the algorithm again, both the license server and the client device possess the same number of available licenses, $a_f = a_{f1} = n/2$. Hence, the algorithm reached a network equilibrium. Note that the client device continues to send license-exchange requests, which however do not affect the license distribution anymore.

Later, a second client enters the network and sends a license-exchange request 840. The algorithm on the license server now splits its available licenses ($a_f=n/2$) evenly across the license server and that second client device: $a_f = a_{f2} = n/4$. This temporarily brings the system out of equilibrium again and hence, when the first client device sends its next license-exchange request 850, the license server tries to adjust this by evening out the licenses between itself ($a_f= n/4$) and the first client device ($a_{f1}=n/2$), which results in $a_f=a_{f1} = 3n/8$. After some more license exchanges, the network settles at a new equilibrium 860 where $a_f = a_{f1} = a_{f2} = n/3$, i.e. where all client devices (and the license server) possess the same number of available licenses.

FIG.8 shows another disturbance of the equilibrium 870 when the licensed feature on client device 2 suddenly allocates some of the available licenses, which results in a drop of $a_{f2}$. The steady state will be re-established by the periodic license-exchanges between both client devices and the license server until finally, the algorithm re-establishes network equilibrium 890.

With reference FIG. 4, which illustrates an exemplary system 400 used in performing the method includes a general-purpose computing device 400, including a processing unit (CPU or processor) 420 and a system bus 410 that couples various system components including the system memory 430 such as read only memory (ROM) 440 and random access memory (RAM) 450 to the processor 420. The system 400 can include a cache 422 of high speed memory connected directly with, in close proximity to, or integrated as part of the processor 420. The system 400 copies data from the memory 430 and/or the storage device 460 to the cache 422 for quick access by the processor 420. In this way, the cache provides a performance boost that avoids processor 420 delays while waiting for data. These and other modules can control or be configured to control the processor 420 to perform various actions. Other system memory 430 may be available for use as well. The memory 430 can include multiple different types of memory with different performance characteristics. It can be appreciated that the disclosure may operate on a computing device 400 with more than one processor 420 or on a group or cluster of computing devices networked together to provide greater processing capability. The processor 420 can include any general purpose processor and a hardware module or software module, such as Mod1 462, Mod2 464, and Mod3 466 stored in storage device 460, configured to control the processor 420 as well as a special-purpose processor where software instructions are incorporated into the actual processor design. The processor 420 may essentially be a completely self-contained computing system, containing multiple cores or processors, a bus, memory controller, cache, etc. A multi-core processor may be symmetric or asymmetric.

The system bus 410 may be any of several types of bus structures including a memory bus or memory controller, a peripheral bus, and a local bus using any of a variety of bus architectures. A basic input/output (BIOS) stored in ROM 440 or the like, may provide the basic routine that helps to transfer information between elements within the computing device 400, such as during start-up. The computing device 400 further includes storage devices 460 such as a hard disk drive, a magnetic disk drive, an optical disk drive, tape drive or the like. The storage device 460 can include software modules 462, 464, 466 for controlling the processor 420. Other hardware or software modules are contemplated. The storage device 460 is connected to the system bus 410 by a drive interface. The drives and the associated computer-readable storage media provide nonvolatile storage of computer-readable instructions, data structures, program modules and other data for the computing device 400. In one aspect, a hardware module that performs a particular function includes the software component stored in a tangible computer-readable storage medium in connection with the necessary hardware components, such as the processor 420, bus 410, display 470, and so forth, to carry out the function. In another aspect, the system can use a processor and computer-readable storage medium to store instructions which, when executed by the processor, cause the processor to perform a method or other specific actions. The basic components and appropriate variations are contemplated depending on the type of device, such as whether the device 400 is a small, handheld computing device, a desktop computer, or a computer server.

Although the exemplary embodiment described herein employs the hard disk 460, other types of computer-readable media which can store data that are accessible by a computer, such as magnetic cassettes, flash memory cards, digital versatile disks, cartridges, random access memories (RAMs) 450, and read only memory (ROM) 440, may also be used in the exemplary operating environment. Tangible computer-readable storage media, computer-readable storage devices, or computer-readable memory devices, expressly exclude media such as transitory waves, energy, carrier signals, electromagnetic waves, and signals per se.

To enable user interaction with the computing device 400, an input device 490 represents any number of input mechanisms, such as a microphone for speech, a touch-sensitive screen for gesture or graphical input, keyboard, mouse, motion input, speech and so forth. An output device 470 can also be one or more of a number of output mechanisms known to those of skill in the art. In some instances, multimodal systems enable a user to provide multiple types of input to communicate with the computing device 400. The communications interface 480 generally governs and manages the user input and system output. There is no restriction on operating on any particular hardware arrangement and therefore the basic features here may easily be substituted for improved hardware or firmware arrangements as they are developed.

The various embodiments described above are provided by way of illustration only and should not be construed to limit the scope of the disclosure. Various modifications and changes may be made to the principles described herein without following the example embodiments and applications illustrated and described herein, and without departing from the spirit and scope of the disclosure.

**Claims**

1. A license server for distributing floating licenses, comprising:

   a device connection module configured to manage a connection over a communication network to a client device;
   a license arbitration module configured to:

   receive a license request for a feature from the client device;
   determine a number of licenses for the feature to allocate to the client device based on an arithmetic function over the number of available licenses for the feature and the number of licenses available for the client device; and
   distribute the allocated number of licenses to the client device; and

   a memory module storing the number of available licenses for the feature on the server and the number of licenses allocated to client device.

2. The license server of claim 1, wherein license arbitration module is configured to update the memory module to store a number of licenses that are still available for leasing to client devices

3. The license server of claim 1, wherein the license arbitration module is further configured to receive a maximum number of licenses for the feature for the client; determine if the number of allocated licenses to the client exceeds the maximum; if so, setting the allocated number of licenses for the client to the maximum; and returning an excess to the number of available licenses on the server.

4. The license server of claim 1, wherein the memory module is further configured to store a client table including the number of licenses allocated to the client device and a number of licenses used by the client device.

5. The license server of claim 1, wherein there are a plurality of features, the memory module storing the number of available licenses for each feature and the number of licenses for each respective feature that has been allocated to client devices.

6. The license server of claim 1, wherein the license arbitration unit receives requests from a plurality of clients for licenses for the same feature, the license arbitration unit configured to iterate over all requests and computes the new number of allocated licenses for each client device.

7. The license server of claim 1, wherein the license arbitration unit periodically receives license exchange requests from the plurality of clients, the requests including a current number of licenses allocated to the client.

8. A client device, comprising:

   a server connection module configured to manage a connection over a communication network to a license server;
   a license management module configured to:

   send a license request for a feature to the license server;
   determine a number of licenses for the feature in use by the client device;
   determine a number of licenses for the feature available for use on the client device; and

a memory module storing the number of licenses allocated to the client device and the number of licenses used by the client device.

9. The client device of claim 8, wherein the license management module is further configured to periodically send the number of allocated licenses to the license server; receiving an updated number of allocated licenses; and store the updated number in the memory module.

10. The client device of claim 8, wherein the license management module is further configured to repeated the license requests and wait a predetermined period of time before repeating the request.

11. The client device of claim 8, wherein the memory module is further configured to store a maximum number of instance for the feature and a number of permanently installed licenses.

12. The client device of claim 8, wherein the license management module is further configured stop instances of feature that exceed the number of allocated licenses.

13. The client device of claim 8, wherein license is a floating license.

14. The client device of claim 8, wherein the license request is sent before client device joins the network.

15. A method of allocating floating licenses, comprising:

storing a server table of features available for licensing in a license database;
associating a number of available licenses with each respective feature;
associating a number of allocated licenses with the feature;
storing in a client table in the license database a current number of licenses allocated to the client and a number of licensed used by for each respective client;
receiving at a license server a license-exchange request from a client device when the client joins the network, the license exchange request including, for each feature licensed by that client, a current number of licenses allocated to that client and a number of licensed used by that client;
updating the client table in the database with the received values;
iterating over all features and computing a new number of allocated licenses for the feature to the client device; and
sending to the client the new values for all features.

FIG. 1

| Server-Side License Database | License Server | Network | Client Device with Licensable Features | Client-Side License Database |

120        110        130        140        150

FIG. 2

110

**License Server**

| Server-Side License Database | Database Access Unit | License Arbitration Unit | Device Connection Management Unit | Network | Client Device with Licensable Features |

120     111     112     113     130     140

FIG. 3

140

**Client Device**

| License Server | Network | Server Connection Unit | License Management Unit | Database Access Unit | Client-Side License Database |

110     130     141     142     142     150

FIG. 4

Server-Side License Database

Server License Table — 121

| Software Feature: $f$ | # available: $a_f$ | # used: $u_f$ | # installed: $i_f$ |

— 122

Client License Table

| Client Device: $c$ | Software Feature: $f$ | # available: $a_{fc}$ | # used: $u_{fc}$ | # leased: $l_{fc}$ | # installed: $i_{fc}$ |

# total: $t_{fc}$          # total: $t_{fc}$

License
Server

110

— 120

Zone Table — 123

| License Zone: $z$ | Parent Zone: $p_z$ |

Zone-Device Table — 124

| License Zone: $z$ | Client Device: $c$ |

Zone-Feature Table — 125

| License Zone: $z$ | Software Feature: $f$ | # max: $max_{zf}$ | # used $u_{zf}$ |

FIG. 5

Client-Side License Database

Client
Device

140

150

151

Client License Table

| Software Feature: $f$ | # available: $a_{fc}$ | # used: $u_{fc}$ | # leased: $l_{fc}$ | # installed: $i_{fc}$ | $max_{fc}$ |

# total: $t_{fc}$          # total: $t_{fc}$

FIG. 6

Wait for request from any client $c$

610

620

For each feature $f$

End

Send response to client with new values of $I_{cf}'''$ for all $f$

660

630

Compute new number of licenses leased to client $c$: $I_{cf}'$

640

Apply client limits to that number $I_{cf}' \rightarrow I_{cf}''$

650

Apply server limits to that number $I_{cf}'' \rightarrow I_{cf}'''$

FIG. 7

710 → Send license-exchange request: send content of the Client License Table **151**

720 → Wait for response from license server with updated $l_{fc}$

730 For each feature $f$

End → 760 Wait for timeout $t$

740 $u_{fc} > l_{fc} + i_{fc}$

No

Yes

750 Stop $u_{fc} - l_{fc} - i_{fc}$ instances of feature $f$

FIG. 8

# licenses: $a_f, a_{fc}$

—— Licenses available on license server: $a_f$

– – – Licenses available on client device 1, $a_{f1}$

· · · · · Licenses available on client device 2, $a_{f2}$

$n$ 810

$n/2$

$n/3$

850

860

880

890

870

820 Timeout $t$ 830 840

760

Time $t$

FIG. 9

Europäisches
Patentamt

European
Patent Office

Office européen
des brevets

# EUROPEAN SEARCH REPORT

**Application Number**

EP 18 16 0017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/185197 A1 (BROWN CHRISTOPHER W [US] ET AL) 18 July 2013 (2013-07-18)<br>* abstract *<br>* paragraphs [0019] - [0026] *<br>* paragraphs [0065] - [0067] *<br>* paragraphs [0087] - [0103] *<br>* paragraphs [0116] - [0120] *<br>* paragraphs [0123] - [0146] *<br>* claims 1-20 *<br>* figures 1-32 * | 1-15 | INV.<br>G06F21/10 |
| X | US 5 260 999 A (WYMAN ROBERT M [US])<br>9 November 1993 (1993-11-09)<br>* abstract *<br>* column 6, line 41 - column 8, line 40 *<br>* column 9, line 25 - column 18, line 27 *<br>* claims 1-12 *<br>* figures 1-46 * | 1-15 | |
| A | US 7 962 424 B1 (COLOSSO JUAN-CARLOS [US] ET AL) 14 June 2011 (2011-06-14)<br>* abstract *<br>* column 1, line 49 - column 5, line 3 *<br>* column 5, line 42 - column 7, line 30 *<br>* column 9, line 8 - column 13, line 14 *<br>* claims 1-26 *<br>* figures 1-8 * | 1-15 | TECHNICAL FIELDS SEARCHED (IPC)<br><br>G06F |

The present search report has been drawn up for all claims

| Place of search | Date of completion of the search | Examiner |
|---|---|---|
| Munich | 29 May 2018 | Bichler, Marc |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 18 16 0017

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2018

| Patent document cited in search report | Publication date | Patent family member(s) | Publication date |
|---|---|---|---|
| US 2013185197 A1 | 18-07-2013 | US 2013185197 A1<br>WO 2013109992 A2 | 18-07-2013<br>25-07-2013 |
| US 5260999 A | 09-11-1993 | NONE | |
| US 7962424 B1 | 14-06-2011 | NONE | |

EPO FORM P0459

For more details about this annex : see Official Journal of the European Patent Office, No. 12/82